# EUROPÄISCHE PATENTSCHRIFT

(11) **EP 0 418 760 B1**
(45) Veröffentlichungstag und Bekanntmachung des Hinweises auf die Patenterteilung: **20.12.1995**
(21) Anmeldenummer: 90117778.2
(22) Anmeldetag: 15.09.1990
(51) Int. Cl.: B29C 47/90, B29C 47/88, B29C 53/78

(54) **Verfahren zur Herstellung eines grosskalibrigen Kunststoffrohres und Strangpresswerkzeug für die Durchführung des Verfahrens**
Method of manufacturing a large calibre plastic pipe and extruder for carrying out said method
Procédé de fabrication d'un tuyau de gros calibre en matière plastique et dispositif d'extrusion pour la mise en oeuvre du procédé

(30) Priorität: 22.09.1989 DE 3931614
(43) Veröffentlichungstag der Anmeldung: 27.03.1991
(73) Patentinhaber: Petzetakis, George Aristovoulos, GR-183 46 Moschaton, Piraeus (GR)
(72) Erfinder: Dikis, Byron, GR-183 46 Moschaton Piraeus (GR); Charaktinos, John, GR-183 46 Moschaton Piraeus (GR)
(74) Vertreter: Andrejewski, Walter

(56) Entgegenhaltungen:
- CH-A- 496 194
- DE-A- 2 308 418
- DE-A- 2 506 517
- DE-A- 2 613 385
- DE-U- 8 704 071
- DE-U- 8 803 551
- US-A- 3 395 205

## Beschreibung

Die Erfindung betrifft ein Verfahren zur Herstellung eines großkalibrigen Kunststoffrohres, wobei ein Kunststoffhohlprofil aus thermoplastischem Kunststoff, welches einen rechteckigen Querschnitt aufweist, stranggepreßt (extrudiert) sowie das Kunststoffhohlprofil auf einer Trommel mit dicht an dicht liegenden Windungen mit ausreichender Verformungsfähigkeit schraubenwendelförmig gewickelt wird und wobei die Windungen beim Wickelvorgang an den Berührungsflächen miteinander mittels Stumpfnaht unter Anwendung von Axialdruck und Wärme verschweißt werden, nachdem das kalibrierte und gestaltfest eingestellte Kunststoffhohlprofil an den Berührungsflächen wieder auf Schweißtemperatur des thermoplastischen Kunststoffes erwärmt wurde, wobei die Stumpfnaht zwischen den Windungen mit einem unterhalb des kritischen Drucks der Gestaltfestigkeit liegenden Axialdruck geschweißt wird. Die Erfindung betrifft weiterhin eine Vorrichtung zur Durchführung des Verfahrens. - Der Kunststoff, aus dem das Kunststoffhohlprofil hergestellt wird, kann grundsätzlich ein beliebiger, für die Herstellung von Rohren geeigneter thermoplastischer Kunststoff sein. Insbesondere kann der Kunststoff der Gruppe der Polyolefine wie PE, PP etc. angehören. Der Kunststoff kann eine integrierte Bewehrung aus Fasern aufweisen und mit feinteiligen Füllern, insbesondere mineralischen Füllern versehen sein.

Bei dem Verfahren, von dem die Erfindung ausgeht (DE-A-23 08-418), ist das Kunststoffhohlprofil ein einzelliges Profil mit quadratischem oder rechteckigem Außenquerschnitt. Das Kunststoffhohlprofil wird mit im wesentlichen runden Innenquerschnitt extrudiert. In dieses Kunststoffhohlprofil wird bei der Extrusion eine Kühlflüssigkeit eingeleitet. Die Kühlflüssigkeit wird über zumindest eine Windung geführt. Die Windungen werden mit den Berührungswänden des Kunststoffhohlprofils dicht an dicht aneinanderliegend bei ausreichender Temperatur und unter dem Einfluß eines ausreichenden Axialdruckes verschweißt. Die bekannten Maßnahmen gehen von der Konzeption aus, daß bei der Herstellung von Rohren und insbesondere großkalibrigen Rohren aus Kunststoffhohlprofilen auf Flansche mit Überlappungsschweißnähten oder Formschluß verzichtet werden kann. Die bekannten Maßnahmen nützen die Tatsache aus, daß ein Kunststoffhohlprofil, welches sich auf Verformungstemperatur befindet, ohne weiteres mit dicht an dicht nebeneinanderliegenden Windungen gewickelt werden kann. Im Anschluß daran werden axiale Drücke, die für das Verschweißen der nebeneinanderliegenden Berührungswände erforderlich sind, vorzugsweise kinematisch erzeugt. Gleichzeitig wirkt ein durch die Einführung der Kühlflüssigkeit erzeugter Stützkern in dem Kunststoffhohlprofil gleichsam als Widerlager. Das erlaubt in axialer Richtung eine hinreichende Kompression und Stauchung für eine einwandfreie flächige Verschweißung der nebeneinanderliegenden Berührungswände des schraubenwendelförmig gewickelten Kunststoffhohlprofils. Man kann im Rahmen der bekannten Maßnahmen die Verhältnisse so einstellen, daß der Axialdruck eine bleibende Verformung bewirkt und den Querschnitt des Kunststoffhohlprofils beim Schweißen verändert. Ob das eine oder das andere eintritt, hängt von der Einstellung des axialen Druckes, d.h. der Stauchung, und von der Einstellung der Temperaturverhältnisse, aber auch von der Einstellung der Kühlung ab. Es versteht sich, daß das fertige Rohr von dem Wickeldorn, der auch als Trommel bzeichnet wird, abgezogen wird. - Die bekannten Maßnahmen haben sich bewährt, führen jedoch zu Kunststoffrohren mit für eine vorgegebene aufzunehmende Beanspruchung verhältnismäßig großem Gewicht. Sie lassen sich nur mit Kunststoffhohlprofilen herstellen, deren rechteckige Querschnittsform von der quadratischen Querschnittsform nur wenig entfernt ist.

Bekannt ist ferner ein gewickeltes Kunststoffrohr aus einem extrudiertem Kunststoffband, welches außenseitig ein oder mehrere Hohlrippen aufweist, so daß das gewickelte Kunststoffrohr außenseitige, schraubenlinenförmige Leisten aufweist (CH-A-496 196).

Zur Innenkühlung von stranggepreßten Hohlprofilen ist ein Strangwerkzeug mit Außenwerkzeug und Innenwerkzeug bekannt, bei dem das Innenwerkzeug zellenbildende Dorne aufweist, an die den einzelnen Dornen angepaßte Kühlbauteile angeschlossen sind (DE-A-25 06 517).

Der Erfindung liegt die Aufgabe zugrunde, ein Verfahren und eine Vorrichtung anzugeben, welches es erlaubt, Kunststoffrohre des beschriebenen Aufbaus mit reduziertem Gewicht, die nichtsdestoweniger die vorgegebenen Beanspruchungen ohne weiteres aufzunehmen in der Lage sind, herzustellen.

Diese Aufgabe wird verfahrensmäßig dadurch gelöst, daß das Kunststoffhohlprofil mit langgestrecktem rechteckigen Gesamtquerschnitt als Mehrzellenprofil mit Profilaußenwänden und zellenbildenden Stegen in einem Strangpreßwerkzeug geformt sowie dabei und/oder danach durch eine Innenkühlung der Profilaußenwände und der zellenbildenden Stege kalibriert wird. Die Erfindung geht von der Erwägung aus, daß eine beachtliche Gewichtsreduzierung ohne Beeinträchtigung der Beanspruchbarkeit möglich ist, wenn mit einem Kunststoffhohlprofil gearbeitet wird, welches einen langgestreckten rechteckigen Querschnitt und in diesem eine Mehrzahl von ebenfalls rechteckigen Zellen aufweist, die durch zellenbildende Stege voneinander getrennt sind. Dabei können die Profilaußenwand und die zellenbildenden Stege mit verhältnismäßig geringer Wanddicke ausgebildet werden, was eine beachtliche Gewichtsersparnis ermöglicht. Ein solches Kunststoffhohlprofil kann jedoch nicht in der eingangs beschriebenen bekannten Weise zum Rohr gewickelt und windungsweise unter Anwendung von Axialdruck verschweißt werden. Ohne weiteres würde es bei der erforderlichen Verformungstemperatur und unter dem Einfluß des für das Verschweißen erforderlichen Axialdruckes nach außen ausknicken. Die Erfindung verhindert dieses durch die Innenkühlung sowie die dadurch erreichte Stabilisierung und Einstellung der Gestaltfestigkeit. Im übrigen kann ein solches langgestrecktes mehrzelliges Kunststoffhohlprofil nicht ohne Kalibrierung eingesetzt werden, weil die Profilaußenwände im Bereich der Zellen einfallen würden. Das stört in optischer Hinsicht und beeinträchtigt darüber hinaus das Flächenträgheitsmoment des Kunststoffhohlprofils und damit die Ringsteifigkeit und Stabilität des gesamten Rohres. Grundsätzlich ist es bekannt, eine Kalibrierung eines auch mehrzelligen Kunststoffhohlprofils durchzuführen, und zwar als sogenannte Vakuumkalibrierung. Die Vakuumkalibrierung kann jedoch in das eingangs beschriebene Verfahren, von dem die Erfindung ausgeht und welches die Erfindung fortführt, nicht ohne weiteres integriert werden. Die Erfindung geht von der Erkenntnis aus, daß durch eine ausreichende Innenkühlung der Außenwände und der zellenbildenden Stege das mehrzellige Kunststoffhohlprofil gleichzeitig außen kalibriert und mit einer solchen Gestaltfestigkeit (im Sinne der klassischen technischen Mechanik) versehen werden kann, daß es die zur Herstellung der Stumpfschweißnaht zwischen den benachbarten Windungen erforderliche axiale Pressung ohne Gefahr des Ausknickens aufnehmen kann. Das gelingt, wenn der Axialdruck nicht zu hoch sein muß. Letzteres läßt sich durch die Beheizung der Berührungsflächen erreichen. Die Stumpfnaht zwischen den Windungen kann stets mit einem unterhalb des kritischen Druckes der Gestaltfestigkeit liegenden Axialdruck geschweißt werden. Die Länge des rechteckigen Querschnittes kann um einen Faktor 1 bis 5 oder sogar mehr größer sein als die Höhe oder Dicke des rechteckigen Gesamtquerschnitts des Kunststoffhohlprofils. Das Kunststoffhohlprofil kann eine Vielzahl von Zellen aufweisen.

Im einzelnen bestehen im Rahmen der Erfindung mehrere Möglichkeiten der weiteren Ausbildung und Gestaltung. Im allgemeinen wird man die Innenkühlung durch gekühlte Bauteile des Strangpreßwerkzeuges und/oder durch daran angeschlossene Kühlbauteile bewirken. Die Kalibrierung sowie die Gestaltfestigkeit werden durch den Temperaturgradienten bei der Kühlung und durch die Kühlzeit eingestellt. Nach bevorzugter Ausführungsform erfolgt die Kühlung mit einer gekühlten Flüssigkeit vorgegebener Kühltemperatur. Überraschenderweise erreicht die Erfindung durch die Innenkühlung auch eine sehr genaue Außenkalibrierung des Kunststoffhohlprofils, wenn in der beschriebenen Weise gearbeitet und eine ausreichende Gestaltfestigkeit eingerichtet wird. Nichtsdestoweniger kann im Rahmen der Erfindung zusätzlich eine Außenkühlung verwirklicht und damit oder durch Kalibrierwerkzeuge die Außenkalibrierung verbessert werden.

Gegenstand der Erfindung ist auch Strangpreßwerkzeug für die Durchführung des beschriebenen Verfahrens, wie es Gegenstand der Patentansprüche 5 und 6 ist.

Im folgenden wird die Erfindung anhand einer lediglich ein Ausführungsbeispiel darstellenden Zeichnung ausführlicher erläutert. Es zeigen in schematischer Darstellung
- Fig. 1: die Seitenansicht einer Anlage, die für das erfindungsgemäße Verfahren eingerichtet ist ,
- Fig. 2: in gegenüber der Fig. 1 wesentlich vergrößertem Maßstab einen Schnitt in Richtung A-A durch den Gegenstand nach Fig. 1,
- Fig. 3: in nochmaliger Vergrößerung den Ausschnitt B aus dem Gegenstand nach Fig. 2,
- Fig. 4: in gegenüber der Fig. 1 vergrößertem Maßstab einen Schnitt in Richtung C-C durch den Gegenstand nach Fig. 1, ausschnittsweise,
- Fig. 5: im Maßstab der Fig. 2 einen Schnitt in Richtung D-D durch den Gegenstand nach Fig. 1,
- Fig. 6: einen Schnitt in Richtung E-E durch den Gegenstand nach Fig. 5,
- Fig. 7: entsprechend der Fig. 2 einen Schnitt durch eine andere Ausführungsform des Gegenstandes der Fig. 1, und
- Fig. 8: einen Schnitt in Richtung F-F durch den Gegenstand der Fig. 7

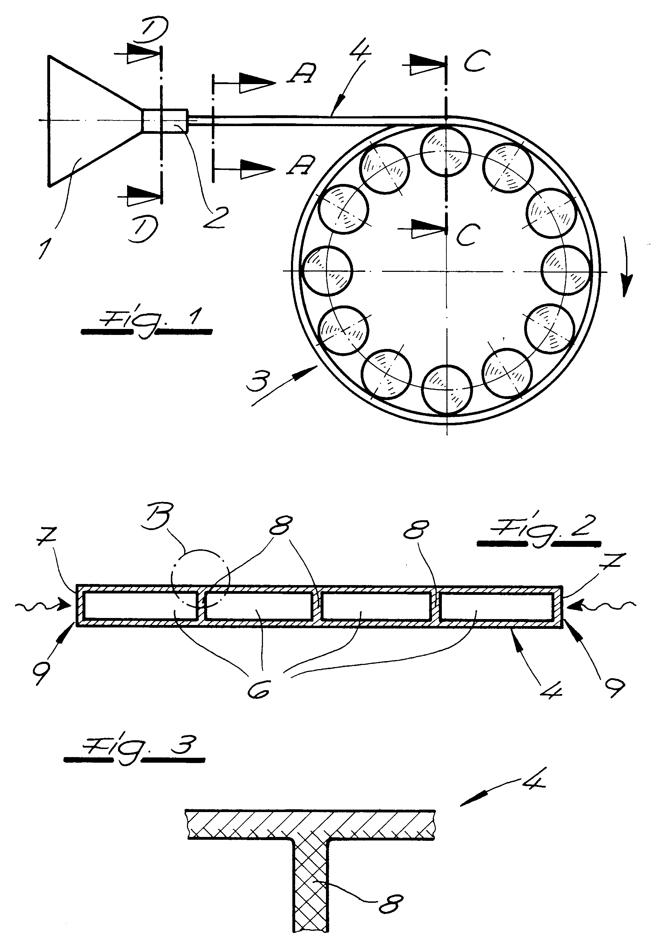

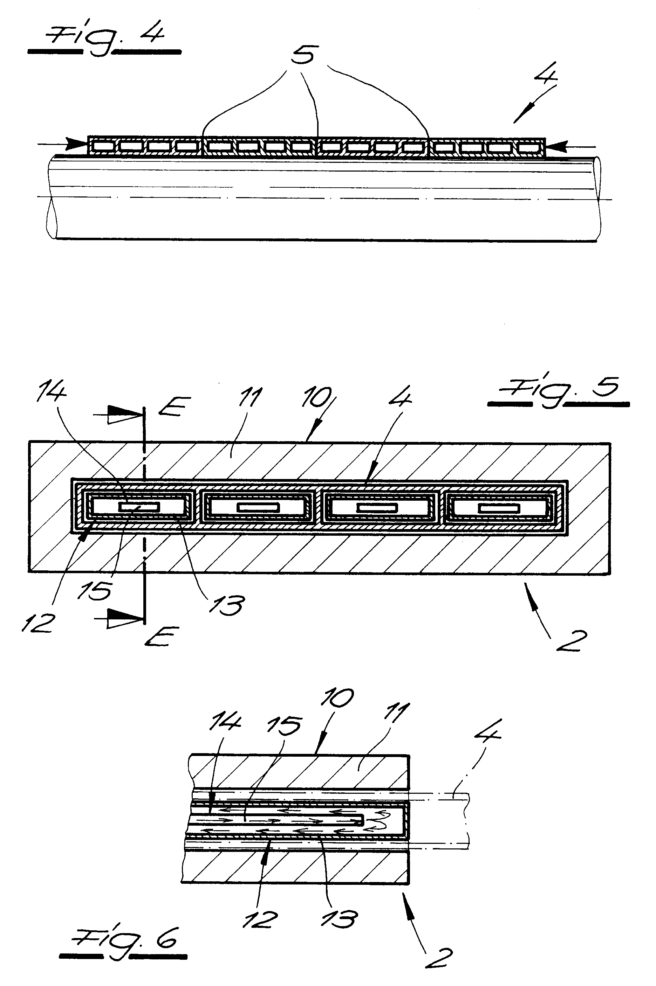

In der Fig. 1 erkennt man den Werkzeugkopf 1 einer Kunststoffschnekkenpresse (eines Extruders), an den sich ein Kühlfortsatz 2 anschließt. Man erkennt rechts eine rotierende Trommel 3, die auch als Wickeldorn bezeichnet werden könnte. Im einzelnen mag diese Anlage im übrigen in weitgehender Übereinstimmung mit den eingangs beschriebenen bekannten Maßnahmen aufgebaut sein (DE-AS 23 08 418). Vergleicht man die Fig. 1 und 4, so erkennt man, daß ein Kunststoffhohlprofil 4 aus thermoplastischem Kunststoff, welches einen rechteckigen Querschnitt aufweist, stran gepreßt und auf der Trommel 3 mit dicht an dicht liegenden Windungen bei ausreichender Verformungsfähigkeit gewickelt wird. Die Windungen werden beim Wickelvorgang an den Berührungsflächen miteinander mittels Stumpfnaht 5 unter Anwendung von Axialdruck und Wärme verschweißt.

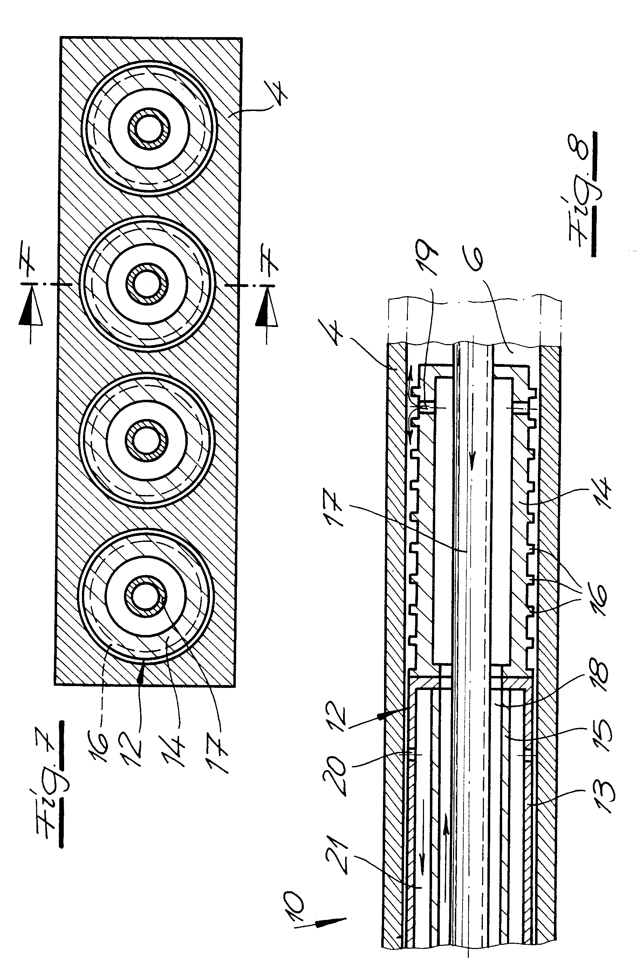

Insbesondere aus der Fig. 2 erkennt man, daß das Kunststoffhohlprofil 4 mit einem langgestreckten, rechteckigen Querschnitt versehen und als Mehrzellenprofil aufgebaut ist. Im Ausführungsbeispiel sind vier Zellen 6 vorgesehen. Das Kunststoffhohlprofil 4 besitzt Profilaußenwände 7 und zellenbildende Stege 8. Es ist in einem entsprechenden Strangpreßwerkzeug im Werkzeugkopf 1 geformt sowie dabei und/oder danach durch eine Innenkühlung der Profilaußenwände 7 und der zellenbildenden Stege 8 kalibriert worden. Die erreichte Kalibrierung ist eine Außenkalibrierung, obgleich sie durch eine Innenkühlung bewirkt wird. Gleichzeitig wurde jedoch das Kunststoffhohlprofil 4 durch diese Innenkühlung mit einer Gestaltfestigkeit versehen, die bis zu einem vorgegebenen kritischen Druck stabil ist, und zwar auch bei Verformungstemperatur. In der Fig. 3 wurde durch die Doppelschraffur angedeutet, daß durch die Innenkühlung im statischen Sinne gleichsam eine Schalenbildung erreicht wird und im Ergebnis ein Kastentragwerk entstanden ist, welches die beschriebene Gestaltfestigkeit besitzt. Das kalibrierte und gestaltfest eingestellte mehrzellige Kunststoffhohlprofil 4 ist an den Berührungsflächen 9 wieder auf die Schweißtemperatur des thermoplastischen Kunststoffes erwärmt worden, beispielsweise durch eine Bestrahlung der entsprechenden Berührungsflächen 9 mit Infrarotstrahlen, wie es in der Fig. 2 durch geweilte Pfeile angedeutet wurde. Die Stumpfnaht 5 zwischen den Windungen wird mit einem unterhalb des kritischen Druckes der Gestaltfestigkeit liegenden Axialdruck geschweißt, wie es die Pfeile in der Fig. 4 andeuten. Der durch die Pfeile angedeutete Axialdruck ist im allgemeinen um etwa 10 bis 15 Prozent kleiner als es dem kritischen Druck der eingestellten Gestaltfestigkeit entspricht. Die Innenkühlung erfolgt mit einer gekühlten Kühlflüssigkeit, z. B. Wasser oder Öl.

Die Fig. 5 und 6 erläutern Einzelheiten zu einem Strangpreßwerkzeug 10, welches für die Durchführung des erfindungsgemäßen Verfahrens besonders eingerichtet und in dem Werkzeugkopf 1 angeordnet ist. Das Strangpreßwerkzeug 10 besitzt ein Außenwerkzeug 11 und ein Innenwerkzeug 12. Das Innenwerkzeug 12 ist mit zellenbildenden Dornen 13 versehen. Diese sind Hohldorne. Die zellenbildenden Dorne 13 und/oder daran angeschlossene Kühlbauteile 14 sind kühlbar ausgeführt. Dazu reicht ein Kühlrohr in die gesamte Länge der zellenbildenden Dorne 13 bzw. der angeschlossenen Kühlbauteile 14 hinein, jedoch so, daß die über ein Hühlrohr 15 zugeführte Kühlflüssigkeit aus dem Kühlrohr 15 austreten kann. Sie wird am Abschlußende der zellenbildenden Dorne 13 oder Kühlbauteile 14 umgelenkt und strömt, das Kühlrohr 15 außen umgebend, zurück. Das Kühlrohr 15 kann wärmeisoliert ausgeführt sein. Im übrigen könnte der Strömungsweg der Kühlflüssigkeit auch umgekehrt werden In der Fig. 5 erkennt man ein Teilstück des Außenwerkzeuges 11. Auch dieses könnte gekühlt sein. - Die beschriebenen Maßnahmen eignen sich insbesondere für die Herstellung von großkalibrigen Kunststoffrohren des beschriebenen Aufbaus aus Polyvinylchlorid.

Der Aufbau eines anderen Strangpreßwerkzeuges 10 für die Durchführung des erfindungsgemäßen Verfahrens ergibt sich aus den Fig. 7 und 8. Auch dieses Strangpreßwerkzeug 10 besteht aus einem Außenwerkzeug 11 und aus einem Innenwerkzeug 12, wobei das Innenwerkzeug 12 zellenbildende Dorne 13 aufweist. Aus einer vergleichenden Betrachtung der Fig. 1 und 8 ergibt sich, daß bei der Ausführungsform nach den Fig. 7 und 8 die zellenbildenden Dorne 13 und daran angeschlossene Kühlbauteile 14 sich auch in einen Bereich hineinerstrecken, der von dem Außenwerkzeug 11 nicht mehr umgeben ist. An die Dorne 13 sind die den einzelnen Dornen angepaßte Kühlbauteile 14 angeschlossen. Diese besitzen mit Abstand voneinander umlaufende Rippen 16 in Form von Ringen oder Schraubenwendeln. In der Achse der Dorne 13 und der Kühlbauteile 14 ist jeweils ein Rückführungsrohr 17 für ein Kühlmittel angeordnet. Das Kühlmittel kann, wie beschrieben, Jede gekühlte Flüssigkeit sein, insbesondere auch Wasser oder Öl. Das Kühlmittel ist über einen Ringraum 18 zwischen Rückführungsrohr 17 und Kühlbauteilaußenwand zuführbar. An den Ringraum 18 schließt ein das Rückführungsrohr 17 in den Dornen 13 umgebendes Kühlmittelzuführungsrohr 15 an. Das Kühlmittel tritt am Ende der Kühlbauteile 14 über Bohrungen 19 in den Bereich der schon erwähnten Rippen 16 aus. Die Dorne 13 besitzen Absaugbohrungen 20 für das Kühlmittel zumindest im Bereich der Dornenden. Die Absaugbohrungen 20 münden in einen Absaugringraum 21 ein, der das jeweilige Kühlmittelzuführungsrohr 15 umgibt. Die Auslegung ist im übrigen so getroffen, daß ein Teilstrom des Kühlmittels an den Kühlbauteilen 14 in Extrusionsrichtung in die Zellen 6 abströmt, wie es in der Fig. 8 durch Pfeile angedeutet ist, die einerseits in diese Abströmrichtung und andererseits zu den Absaugbohrungen 20 hinweisen. Über das jeweils zugeordnete Rückführungsrohr 17 ist das Kühlmittel abführbar.

Während bei der Ausführungsform nach den Fig. 2 bis 6 die Zellen 6 der Kunststoffhohlprofile 4 innenseitig einen rechteckigen Querschnitt aufweisen, entnimmt man aus der Fig. 7, daß hier die Zellen 6 der Kunststoffhohlprofile 4 innen einen runden Querschnitt aufweisen. Diese Ausführungsform des Strangpreßwerkzeuges eignet sich insbesondere für die Herstellung von großkalibrigen Kunststoffrohren aus Polyäthylen. Die Kunststoffhohlprofile 4 werden zunächst wie üblich extrudiert und erfahren eine Kalibrierung hauptsächlich im Bereich außerhalb des Außenwerkzeuges 11 auf den Dornen 13. Die Kalibrierung setzt sich auf den Kühlbauteilen 14 fort, die jedoch hauptsächlich der Kühlung dienen. Das über die Absaugringräume 21 abströmende Kühlmittel ist gegenüber dem aus den Kühlbauteilen 14 austretenden Kühlmittel bereits erwärmt, was die Kalibrierung unterstützt.

## Patentansprüche

1. Verfahren zur Herstellung eines großkalibrigen Kunststoffrohres,
wobei ein Kunststoffhohlprofil (4) aus thermoplastischem Kunststoff, welches einen rechteckigen Querschnitt aufweist, stranggepreßt (extrudiert) sowie das Kunststoffhohlprofil (4) auf einer Trommel (3) mit dicht an dicht liegenden Windungen bei ausreichender Verformungsfähigkeit schraubenwendelförmig gewickelt wird und wobei die Windungen beim Wickelvorgang an den Berührungsflächen (9) miteinander mittels Stumpfnaht (5) unter Anwendung von Axialdruck und Wärme verschweißt werden, nachdem das kalibrierte und gestaltfest eingestellte Kunststoffhohlprofil (4) an den Berührungsflächen (9) wieder auf Schweißtemperatur des thermoplastischen Kunststoffes erwärmt wurde, wobei die Stumpfnaht (5) zwischen den Windungen mit einem unterhalb des kritischen Druckes der Gestaltfestigkeit liegenden Axialdruck geschweißt wird,
**dadurch gekennzeichnet**, daß das Kunststoffhohlprofil (4) mit langgestrecktem, rechteckigen Gesamtquerschnitt als Mehrzellenprofil mit Profilaußenwänden (7) und zellenbildenden Stegen (8) in einem Strangpreawerkzeug geformt sowie dabei und/oder danach durch eine Innenkühlung der Profilaußenwände (7) und der zellenbildenden Stege (8) kalibriert wird.

2. Verfahren nach Anspruch 1, dadurch gekennzeichnet, daß die Innenkühlung durch gekühlte Bauteile des Strangpreßwerkzeuges und/oder daran angeschlossene Kühlbauteile (14) bewirkt wird.

3. Verfahren nach einem der Ansprüche 1 oder 2, dadurch gekennzeichnet, daß die Kalibrierung sowie die Gestaltfestigkeit durch den Temperaturgradienten bei der Kühlung und durch die Kühlzeit eingestellt werden.

4. Verfahren nach einem der Ansprüche 1 bis 3, dadurch gekennzeichnet, daß die Innenkühlung mit einer gekühlten Flüssigkeit vorgegebener Kühltemperatur durchgeführt wird.

5. Strangpreßwerkzeug für die Durchführung des Verfahrens nach einem der Ansprüche 1 bis 4, - mit
Außenwerkzeug (11) und Innenwerkzeug (12),
wobei das Innenwerkzeug zellenbildende Dorne (13) aufweist, an die den einzelnen Dornen (13) angepaßte Kühlbauteile (14) angeschlossen sind, **dadurch gekennzeichnet**, daß die Kühlbauteile (14) mit Abstand voneinander umlaufende Rippen (16) in Form von Ringen oder Schraubenwendeln aufweisen, daß in der Achse der Dorne (13) und der Kühlbauteile (14) ein Rückführungsrohr (17) für ein Kühlmittel angeordnet und das Kühlmittel über einen Ringraum zwischen Rückführungsrohr (17) und Kühlbauteilaußenwand zuführbar ist, an welchen Ringraum ein das Rückführungsrohr (17) in den Dornen (13) umgebendes Kühlmittelzuführungsrohr (15) anschließt, wobei das Kühlmittel am Ende der Kühlbauteile (14) über Bohrungen (19) in den Bereich der Rippen (16) austritt, daß die Dorne (13) Absaugbohrungen (20) für das Kühlmittel zumindest im Bereich der Dornenden aufweisen, die in einen Absaugringraum (21) einmünden, der das jeweilige Kühlmittelzuführungsrohr (15) umgibt, und daß ein Teilstrom des Kühlmittels in den Kühlbauteilen (14) in Extrusionsrichtung in die Zellen (6) abströmt und über das jeweils zugeordnete Rückführungsrohr (17) abführbar ist.

6. Strangpreßwerkzeug nach Anspruch 5, dadurch gekennzeichnet, daß die Dorne (13), die Kühlbauteile (14), die Rückführungsrohre (17) und die Kühlmittelzuführungsrohre (15) einen runden Querschnitt aufweisen.

## Claims

1. A procedure for producing large-calibre plastic pipes,
in which a hollow plastic section (4) of thermoplastic plastic with a rectangular cross section, is extruded and in which the hollow plastic section (4) is helically wound onto a drum (3) in tight windings but maintains adequate deformability and in which the contact surfaces (9) of the windings are welded by a seam weld (5) under axial pressure and heat after reheating the contact surfaces (9) of the calibrated and undeformably adjusted hollow plastic section (4) to the welding temperature of the thermoplastic plastic and in which the seam weld (5) between the windings is welded at an axial pressure lower than the critical fatigue strength pressure,
**characterised** in that, the hollow plastic section (4) having a long, rectangular overall diameter as a multi-cell section including external section walls (7) and cell-forming webs (8) is formed in an extrusion tool and/or is calibrated thereafter by internal cooling of the external section walls (7) and the cell-forming webs (8).

2. A procedure according to claim 1, **characterised** in that internal cooling is carried out by cooled components of the extrusion tool and/or connected cooling components (14).

3. A procedure according to one of the claims 1 or 2, **characterised** in that calibration and fatigue strength are set by the temperature gradient during cooling and by the cooling period.

4. A procedure according to one of the claims 1 to 3, **characterised** in that internal cooling is carried out at a temperature stipulated by a cooled fluid.

5. An extrusion tool for implementing the procedure according to claims 1 to 4, including
an external tool (11) and an internal tool (12),
the internal tool containing cell-forming mandrills (13) to which cooling components (14) adapted to the individual mandrills (13) are connected, **characterised** in that the cooling components (14) contain spaced annular or helical circumferential fins (16), a return pipe (17) for a coolant is located in the axis of the mandrills (13) and the cooling components (14), and the coolant is supplied via an annular area between the return pipe (17) and the external cooling component wall, a coolant return pipe (15) arranged around the return pipe (17) inside the mandrills (13) is connected to said annular area, the coolant enters the fin area (16) through holes (19) at the end of the cooling components (14), at least the ends of the mandrills (13) contain extraction holes (20) for the coolant, leading into an annular extraction area (21) surrounding the respective coolant supply pipe (15) and that part of the flow of the coolant in the cooling components (14) flows into the cells (6) in extrusion direction and is returned via the assigned return pipe (17).

6. An extrusion tool according to claim 5, **characterised** in that the mandrills (13), the cooling components (14), the return pipes (17) and the coolant supply pipes (15) are of circular cross section.

## Revendications

1. Procédé de fabrication d'un tuyau de gros calibre en matière plastique, dans lequel un profilé creux en matière plastique (4), réalisé en matière thermoplastique, qui présente une section transversale rectangulaire, est boudine (extrude) et dans lequel le profilé creux en matière plastique (4) est enroulé sous forme spiralée sur un tambour (3) par spires serrées étroitement les unes contre les autres, avec une aptitude suffisante à la déformation, les spires étant, lors du processus d'enroulement, soudées entre elles sur les surfaces de contact (9) par soudure en bout (5) avec utilisation de la pression axiale et de la chaleur, après que le profilé creux en matière plastique (4) calibré et façonné a été de nouveau chauffé sur les surfaces de contact (9) à la température de soudage de la matière thermoplastique, la soudure en bout (5) entre les spires étant soudée avec une pression axiale inférieure à la pression critique de la stabilité dimensionnelle, caractérisé en ce que le profilé creux en matière plastique (4) est formé dans un outil d'extrusion avec une section transversale totale étirée et rectangulaire sous la forme d'un profilé multicellulaire, avec parois extérieures profilées (7) et des entretoises (8) formant des cellules et est calibré à cette occasion et/ou ensuite par un refroidissement interne des parois extérieures profilées (7) et des entretoises (8) formant des cellules.

2. Procédé selon la revendication 1, caractérisé en ce que le refroidissement interne est effectué par des composants refroidis de l'outil d'extrusion et/ou par des composants de refroidissement (14) qui y sont raccordés.

3. Procédé selon la revendication 1 ou 2, caractérisé en ce que le calibrage ainsi que la stabilité dimensionnelle sont réglés par le gradient de température lors du refroidissement et par le temps de refroidissement.

4. Procédé selon l'une des revendications 1 à 3, caractérisé en ce que le refroidissement interne est effectué avec un liquide refroidi présentant une température de refroidissement prédéterminée.

5. Outil d'extrusion pour la réalisation du procédé selon l'une des revendications 1 à 4, avec outil extérieur (11) et outil intérieur (12), l'outil intérieur présentant des poinçons (13), formant des cellules, auxquels sont raccordés des composants de refroidissement (14) adaptés aux différents poinçons (13), caractérisé en ce que les composants de refroidissement (14) présentent, écartées entre elles, des nervures (16) périphériques, sous forme d'anneaux ou de spirales, en ce que, dans l'axe des poinçons (13) et des composants de refroidissement (14), est disposé un tube de retour (17) destiné à un réfrigérant et que le réfrigérant peut être véhiculé par le biais d'un espace annulaire, entre le tube de retour (17) et la paroi extérieure de composant de refroidissement, espace annulaire auquel se raccorde un tube d'alimentation en réfrigérant (15) entourant le tube de retour (17) dans les poinçons (13), le réfrigérant sortant finalement à l'extrémité des composants de refroidissement (14) par le biais d'alésages (19) dans la zone des nervures (16), en ce que les poinçons (13) présentent des alésages d'aspiration (20) pour le réfrigérant, au moins dans la zone des extrémités de poinçon, qui débouchent dans un espace annulaire d'aspiration (21) qui entoure le tube d'alimentation en réfrigérant (15) respectif, et en ce qu'un flux partiel du réfrigérant s'écoule dans les composants de refroidissement (14), dans le sens d'extrusion, vers l'intérieur des cellules (6) et est évacué par le bais du tube de retour (17) associé, respectif.

6. Outil d'extrusion selon la revendication 5, caractérisé en ce que les poinçons (13), les composants de refroidissement (14), les tubes de retour (17) et les tubes d'alimentation en réfrigérant (15) présentent une section transversale ronde.
